# EUROPÄISCHE PATENTSCHRIFT

(11) **EP 0 930 726 B1**
(45) Veröffentlichungstag und Bekanntmachung des Hinweises auf die Patenterteilung: **24.03.2004**
(21) Anmeldenummer: 99440005.9
(22) Anmeldetag: 14.01.1999
(51) Int. Cl.: H04B 3/23, H04M 9/08

(54) **Verfahren zur Echounterdrückung mit adaptiven FIR-Filtern**
Method for echo cancelling with adaptive FIR filters
Procédé pour annulation d'écho avec filtres adaptifs FIR

(30) Priorität: 16.01.1998 DE 19801389
(43) Veröffentlichungstag der Anmeldung: 21.07.1999
(73) Patentinhaber: ALCATEL, 75008 Paris (FR)
(72) Erfinder: Mann, Armin, 70197 Stuttgart (DE); Matt, Hans Jürgen, Dr., 71686 Remseck (DE); Walker, Michael, 73666 Baltmannsweiler (DE)
(74) Vertreter: Rausch, Gabriele, Dr.

(56) Entgegenhaltungen:
- DE-C- 19 757 337
- US-A- 4 933 891
- US-A- 5 146 494

## Beschreibung

Die Erfindung betrifft ein Verfahren zur Unterdrückung von aus mehreren Teilechos bestehenden Gesamtechos in Telekommunikations (TK)-Einrichtungen, wie Endgeräten, Übertragungssystemen oder Vermittlungseinrichtungen, mit Hilfe von adaptiven FIR (= Finite Impulse Response)-Filtern, die das Gesamtecho nachbilden und von dem an die jeweilige TK-Einrichtung übertragenen, mit dem Echo belasteten Nutzsignal abziehen, wobei n FIR-Teilfilter vorgesehen sind, die jeweils ein Teilecho nachbilden.

Bei der Übertragung von Sprachsignalen auf Telekommunikationsleitungen können einerseits am "nahen Ende" bei dem aussendenden Benutzer akustische Echos aufgrund der direkten Schallübertragung vom Lautsprecher zum Mikrofon des Endgerätes entstehen. Insbesondere bei mehreren räumlich benachbart angeordneten Endgeräten, beispielsweise in einem Büro- oder Konferenzraum mit vielen Telefonanschlüssen, verschärft sich das Nahecho-Problem erheblich, da eine Kopplung von jedem Lautsprechersignal auf jedes Mikrofon erfolgt. Das in der EP 0 627 825 A2 vorgeschlagene Vielkanal-Echo-Unterdrückungsverfahren und die zugehörige elektronische Schaltung sollen hier Abhilfe schaffen.

Neben dem nahen akustischen Echo entsteht aber auch ein ggf. aus unterschiedlich vielen Teilechos zusammengesetztes elektrisches Leitungsecho aufgrund von Reflexionen der ausgesendeten Sprachsignale an unterschiedlich entfernten Stellen im Übertragungskanal, beispielsweise bei 2-4-Drahthybriden (Gabelschaltungen) im Endgerät bzw. in Vermittlungsstellen und an Netzübergängen. Dabei werden üblicherweise sogenannte "Nahbereich-Echos", die in einem Zeitraum bis zu 128 ms zum Sprecher zurückreflektiert werden, unterschieden von Fern-Echos, die in einem Zeitrahmen bis 640 ms an den Sprecher zurückkommen und aufgrund des großen Zeitversatzes besonders störend wirken, da der Sprecher unterdessen in seiner Rede merklich fortgefahren ist, wenn sein eigenes reflektiertes Sprachsignal wieder bei ihm ankommt. Derartige verzögerte Fernechos treten beispielsweise bei interkontinentalen, über Tiefseekabel oder Satelliten übertragenen Ferngespräche auf. Die Netzbetreiber, die entsprechende Fernsprechnetze unterhalten, sind daher bestrebt, insbesondere die Fernechos mit großem Zeitversatz, aber auch die mit ggf. höherer Intensität zurückreflektierten Nahechos möglichst effektiv zu unterdrücken.

Dazu wird beispielsweise in der EP 0 792 029 A2 eine Echounterdrückungseinrichtung mit adaptivem Filter vorgeschlagen, die einen groben und einen feinen Detektor für Nahend-Sprachsignale umfaßt, welche beidseits der Echounterdrückungseinrichtung angeordnet sind und somit das ankommende Signal vor und nach der Echounterdrückung beobachten können. In Sprachpausen vom nahen Ende soll damit eine Anpassung an reflektierte Echowerte vorgenommen werden. In der eingangs zitierten DE 44 30 189 A1 ist ein kostengünstiges Verfahren vorgeschlagen, das bei unterschiedlichen akustischen Bedingungen einsetzbar ist, und bei dem ein FIR-Filter eingesetzt wird, dessen Filterkoeffizienten nach dem NMLS-Algorithmus bestimmt werden. Zur Echounterdrückung in einem TK-Netz mit einer Vielzahl von parallelen Kanälen wird nach dieser Methode für jeden Kanal ein derartiger Echounterdrücker mit adaptivem FIR-Filter eingesetzt, der auf einem digitalen Signalprozessor in Software realisiert ist. Das adaptive FIR-Filter soll dabei das zu erwartende, möglicherweise aus mehreren Einzelechos bestehende Gesamtecho nachbilden und von dem an das TK-Endgerät übertragene, mit dem Echo behaftete Nutzsignal abziehen.

Aufgabe der vorliegenden Erfindung ist es demgegenüber, ein Verfahren der eingangs genannten Art dahingehend weiterzubilden, daß auch bei einer großen Vielzahl von m parallelen, voneinander unabhängigen TK-Kanälen, wie sie in Vermittlungsstellen oder Netzhybriden verarbeitet werden müssen, eine effektive Echounterdrückung ohne großen Speicherplatz- und Rechenaufwand ermöglicht wird.

Erfindungsgemäß wird diese Aufgabe dadurch gelöst, daß eine Vielzahl m parallele, voneinander unabhängige TK-Kanäle mit einer Echounterdrückungsfunktion versorgt werden, und daß eine variable Untermenge der FIR-Teilfilter einem zu bedienenden TK-Kanal jeweils nach Bedarf abhängig von der Anzahl der Teilechos und der Größe der auftretenden Verzögerungszeiten zwischen Signal und Echo zugeordnet wird.

Durch diese flexible Zuordnung der FIR-Teilfilter pro bearbeitetem TK-Kanal je nach Anzahl der Einzelechos und je nach Größe der auftretenden Verzögerungszeit zwischen Signal und Echo kann trotz sehr hoher Kanalzahl m die Anlage zur Durchführung des Verfahrens äußerst kompakt gestaltet und in hohem Maße ausgelastet werden.

Besondere bevorzugt ist eine Ausführungsform des erfindungsgemäßen Verfahrens, bei der die m unabhängigen TK-Kanäle im Zeitmultiplexverfahren mit Echounterdrückungsfunktionen bedient werden. Dadurch läßt sich die zur Durchführung des Verfahrens erforderliche Hardware bzw. Software noch kompakter gestalten, weil viele Funktionselemente, beispielsweise FIR-Teilfilter für mehrere TK-Kanäle gleichzeitig genutzt werden können.

Bei einer weiteren vorteilhaften Ausführungsform sind die adoptiven FIR-Filter durch ein Computerprogramm realisiert, das die nachzubildenden Teilechos in Echtzeit berechnet. Dadurch wird einerseits die Hardware für die Anlage zur Durchführung des erfindungsgemäßen Verfahrens auf ein Minimum reduziert, andererseits können durch Modifizierung bzw. Austausch des Computerprogramms in einfacher Weise Systemänderungen durchgeführt werden.

Bei einer Weiterbildung dieser Ausführungsform enthält das Computerprogramm gleichartige Unterprogramme, die jeweils unabhängig voneinander zeitgleich ablaufen, wobei jedes dieser Unterprogramme als FIR-Teilfilter wirkt und ein Teilecho nachbilden kann. Ein derartig modular aufgebautes Programm ist besonders einfach zu erstellen und läßt sich praktisch auf beliebig viele parallel ablaufende Unterprogramme der gleichen Art und damit auf entsprechend viele FIR-Teilfilter erweitern.

Bei einer zu der oben beschriebenen Softwarelösung alternativen Ausführungsform ist vorgesehen, daß n gleichartige FIR-Teilfilter, die jeweils ein Teilecho nachbilden können, auf einem einzigen ASIC (= Application Specific Integrated Circuit) implementiert sind; daß die nachzubildenden Teilechos in Echtzeit auf dem ASIC berechnet werden; und daß ein digitaler Signalprozessor vorgesehen ist, der den ASIC steuert und die Filtereinstellungen, insbesondere nach erfolgter Berechnung der zur Echonachbildung erforderlichen Koeffizienten und Zeitverzögerungen im ASIC vornimmt.

Durch die hohe Integrationsdichte eines ASIC kann eine Einrichtung zur Durchführung des erfindungsgemäßen Verfahrens besonders kompakt gehalten werden. Da der digitale Signalprozessor durch die Integration der FIR-Filter auf dem ASIC ganz erheblich entlastet wird, können ungleich viel mehr parallele TK-Kanäle bei gleichbleibendem Prozessoraufwand mit einer effektiven Echounterdrückung bedient werden. Damit lassen sich auch größere Verzögerungszeiten der Echos (beispielsweise bis zu 640 ms), eine Vielzahl von Einzelechos pro Gesamtecho und viele parallele Kanäle (>2000) mit minimalem Aufwand bearbeiten.

Vorteilhafterweise wird eine Anzahl von FIR-Teilfiltern kaskadiert betrieben, um ein Gesamtecho nachzubilden. Derzeit liegen die Forderungen der Betreiber von TK-Netzen bei drei bis fünf zu unterdrückenden Teilechos pro Kanal. Dies kann sich jedoch in Zukunft noch erhöhen.

Eine vorteilhafte Weiterbildung zeichnet sich dadurch aus, daß für jedes FIR-Teilfilter eine Makrozelle im ASIC vorgesehen ist, die ein Schieberegister geeigneter Länge zur Zwischenspeicherung der abgetasteten Sprachsignale, eine Demultiplexer-Einrichtung zur Einstellung der wirksamen Schieberegisterlänge sowie eine Summier-Einrichtung zur Summation der mit den entsprechenden Koeffizienten gewichteten Abtastwerten umfaßt. Die Makrozellen können untereinander einen exakt gleichen Aufbau aufweisen, was die Herstellung eines ASIC mit vielen gleichartigen FIR-Teilfiltern vereinfacht und damit verbilligt.

Insbesondere ist eine Kaskadierung mehrerer Makrozellen leicht möglich, was eine beliebige, flexible Zusammenschaltung, beispielsweise zur Nachbildung eines Gesamtechos, und damit einen besonders hohen Ausnutzungsgrad der Mokrozellen ermöglicht.

Eine weitere Variante des erfindungsgemäßen Verfahrens zur Echo-Unterdrückung zeichnet sich dadurch aus, daß ein Dirac-Impuls auf den entsprechenden TK-Kanal gesendet, die Echoantwort darauf detektiert und zur Nachbildung des Gesamtechos geeignete Koeffizienten berechnet und für das entsprechende FIR-Filter abgespeichert werden.

Anstelle des Dirac-lmpulses werden bei anderen Verfahrensvarianten eine definierte analoge Rauschsignalsequenz auf den entsprechenden TK-Kanal gesendet, die Echoantwort darauf detektiert und zur Nachbildung des Gesamtechos geeignete Koeffizienten berechnet und abgespeichert. Die Aussendedauer der Rauschsignalsequenz beträgt in der Regel weniger als eine Sekunde.

Besonders bevorzugt ist eine Weiterbildung dieser Verfahrensvariante, bei der die analoge Rauschsignalsequenz ein vorzugsweise auf die Bandbreite des zu bedienenden TK-Kanals begrenztes Gaußsches Rauschsignal umfaßt.

Eine weitere alternative Verfahrensvariante zeichnet sich dadurch aus, daß eine synthetische, vorzugsweise ternäre Pseudorauschsequenz auf den entsprechenden TK-Kanal gesendet, die Echoantwort darauf detektiert und zur Nachbildung des Gesamtechos geeignete Koeffizienten berechnet und abgespeichert werden. Die Pseudorauschsequenz wird in der Regel so ausgewählt, daß nur der Hauptwert der Sequenz einen Korrelationswert q aufweist, während die Nebenwerte den Korrelationswert 0 haben.

Besonders bevorzugt werden die Koeffizienten zur Echonachbildung durch Korrelation der ausgesendeten mit den empfangenen Echosignalen gewonnen.

Bevorzugt ist auch eine Weiterbildung des erfindungsgemäßen Verfahrens, bei der zur Koeffizientenberechnung aus den empfangenen Echosignalen in Kenntnis der ausgesendeten Signale ein NLMS (= Normalized Least Mean Square)-Algorithmus angewandt wird. Dadurch wird die erforderliche Rechenzeit und Rechenleistung zur Erzielung eines befriedigenden Ergebnisses besonders klein gehalten, in diesem Fall wird die Länge der Rauschsequenz vorteilhaft auf die Länge des FIR-Filters abgestimmt.

Bei einer weiteren bevorzugten Verfahrensvariante wird zusätzlich die Übermittlung von Nicht-Sprachsignalen auf einem TK-Kanal detektiert und insbesondere bei Erkennung von Modem- oder Faxsignalen die Echounterdrückungsfunktion auf dem betreffenden TK-Kanal automatisch ausgeschaltet, was die Verbindungssicherheit für Fax- oder Modem-Verbindungen erhöht.

Bei einer Weiterbildung dieser Verfahrensvariante wird zur Erkennung von Nicht-Sprachsignalen eine diskrete Fourier-Transformation (= DFT), insbesondere ein Goertzel-Algorithmus verwendet. Damit wird besonders wenig Speicherplatz und Rechenkapazität für diese Zusatzfunktion benötigt und die Erkennung läßt sich sehr schnell und sicher durchführen.

Zusätzlich kann bei einer weiteren vorteilhaften Verfahrensvariante auch eine Compander-Funktion zur kombinierten Unterdrückung und Maskierung der auftretenden Leitungsechos durch Absenden des Empfangspegels auf dem entsprechenden TK-Kanal in den Sprachpausen vorgesehen sein. Die Echounterdrückung und damit der Komfort beim Endteilnehmer wird dadurch noch effektiver.

Die Compander-Funktion kann ebenfalls als Computerprogramm oder in Hardwareform auf einem ASIC realisiert sein, vorzugsweise auf demselben ASIC wie die FIR-Teilfilter. Die Hardware-Einheiten sind dann besonders kompakt und preiswert in der Herstellung.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
Fig. 1 in der oberen Hälfte den zeitlichen Verlauf einer typischen Nahbereichs-Echosequenz mit zwei Teilechos und in der unteren Hälfte eine Fern-Echosequenz mit drei Teilechos;
Fig. 2 eine schematische Darstellung einer einfachen Ausführungsform einer Einrichtung zur Echounterdrückung mit lediglich einem zu bedienenden TK-Kanal;
Fig. 3a eine Makrozelle für ein Teil-FIR-Filter;
Fig. 3b eine konkrete Weiterbildung der Makrozelle nach Fig. 3a mit im Multiplexverfahren auslesbarem Koeffizientenspeicher für einen TK-Kanal;
Fig. 4 eine schematische Darstellung von kaskadierten Makrozellen nach Fig. 3a bzw. 3b, wobei im oberen Teil der Figur der zeitliche Verlauf von teilweise recht eng benachbarten Teilechos dargestellt ist;
Fig. 5a eine weitere Ausführungsform mit kaskadierten Makrozellen mit im Multiplexbetrieb auslesbaren Koeffizientenspeichern für die Zeitmultiplexverarbeitung von m TK-Kanälen;
Fig. 5b eine Ausführungsform mit kaskadierten Makrozellen und einer gemultiplexten Schieberegisteranordnung für die eingehenden Abtastwerte unterschiedlicher, voneinander unabhängiger TK-Kanäle; und
Fig. 6 eine Ausführungsform, bei der die Koeffizientenspeicher und Abtastwertspeicher auf eine RAM-Einheit ausgelagert sind und der Ablauf der Teilechonachbildungen für die unterschiedlichen TK-Kanäle im wesentlichen von einer Steuereinheit auf dem ASIC verwaltet wird.

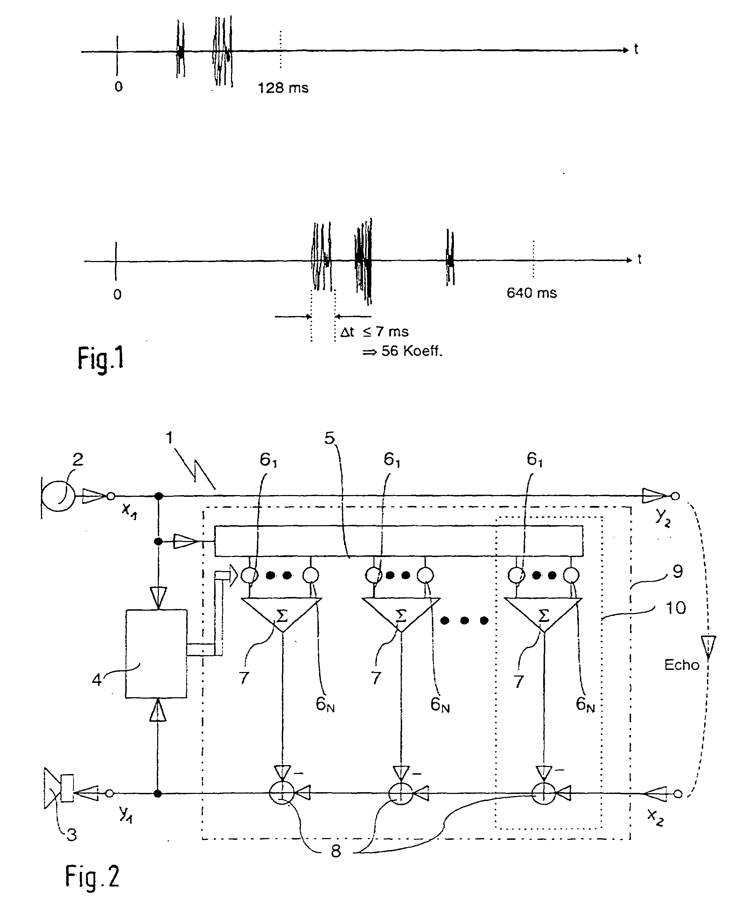

Im oberen Teil von Fig. 1 ist der zeitliche Verlauf einer Folge von Nahbereich-Teilechos dargestellt, die definitionsgemäß eine Verzögerungszeit von bis zu 128 ms gegenüber dem Zeitpunkt des Aussendens des Signals vom entsprechenden TK-Teilnehmer aufweisen. Derartige Leitungsechos kommen beispielsweise an Vermittlungsstellen, Netzhybriden und anderen Arten von Knotenstellen im Netz durch Reflexion zustande, wirken aber dann nicht störend, wenn noch keine merkliche Verzögerungszeit (Größenordnung 10 ms) seit dem Aussenden des Ursprungssignals vergangen ist, weil ein Sprecher an einem TK-Endgerät einen gewissen Echoeffekt auch durch akustische Echos im Raum um ihn herum bzw. seinen eigenen Körperschall im Kopf aufnimmt und quasi automatisch "kompensiert", da er daran gewöhnt ist.

Sehr problematisch werden die Leitungsechos allerdings immer dann, wenn Verzögerungszeiten größer als 50 ms auftreten, was u.a. im unteren Teil von Fig. 1 dargestellt ist. Fern-Echos mit Zeitverzögerungen in der Größenordnung bis 640 ms können beispielsweise bei kontinentalen Ferngesprächen oder bei Interkontinentalverbindungen auftreten. Allein eine Satellitenübertragung eines Signals von einem Kontinent zum anderen beträgt in der Regel ca. 250 ms. Zum Zeitpunkt des Empfangs eines solchen fernen Echos durch den ursprünglichen Absender ist der letztere in seiner Rede schon merklich fortgeschritten, so daß der Echoeffekt besonders störend wirkt. Ähnlich starke Zeitverzögerungen können auftreten, wenn ein Sprachsignal eine starke Kompression und Dekompression durchläuft, oder wenn es parallel zu einer komprimierten Bildübertragung verzögert werden muß, um Lippensynchronität beizuhalten.

Um derartige Echos zu unterdrücken, werden Einrichtungen verwandt, die adaptive FIR-(= Finite Impulse Response)-Filter zur Nachbildung der Echos und dem anschließenden Abzug vom echobehafteten Nutzsignal aufweisen. Für die Bedienung von lediglich einem TK-Kanal ist in Fig. 2 eine solche Einrichtung 1 schematisch dargestellt. Vom Mikrofon 2 eines TK-Endgerätes wird ein Nah-End-Sendesignal x₁ abgesendet und kommt beim fernen Teilnehmer als Sendesignal y₂ an. Auf dem Rückkanal zum Lautsprecher 3 des TK-Endgerätes wird neben dem vom fernen Teilnehmer übertragenen Signal auch ein aus mehreren Teilechos bestehendes Echosignal in das empfangene Signal x₂ eingekoppelt, welches durch die Echounterdrückungseinheit nachbehandelt und als ankommendes Nutzsignal y₁ in den Lautsprecher 3 gegeben wird.

Um ein realistisches Echosignal nachbilden zu können, kann ein Testsignal auf die Leitung an der Stelle y₂ ausgesendet werden, dessen Wirkung die Konvergenz eines NLMS-Algorithmus beschleunigt. In einem Computer, insbesondere einem digitalen Signalprozessor (= DSP) 4 werden aus der Echoantwort mit Hilfe des NLMS-Algorithmus N zur Nachbildung des Echos geeignete Koeffizienten ausgerechnet, die der eigentlichen Einrichtung zur Echosubtraktion, welche auf einem ASIC (= Application Specific Integrated Circuit) 9 implementiert ist, zugeführt werden. Im Zeitmultiplex werden Abtastwerte des eigentlichen Sprachsignals vom TK-Kanal kommend in eine Delay-Line 5 gegeben, die meist als Schieberegister ausgeführt ist. Ferner werden ausgewählte Abtastwerte vom Schieberegister auf das ASIC 9 gegeben. In N Multipliziergliedern 6₁ bis 6_{N} wird dann das Produkt der entsprechenden Abtastwerte aus der Delay-Line 5 mit den aus dem DSP 4 zugelieferten Koeffizienten gebildet, für jedes Teilecho die entsprechende Summe aus diesen Produkten in den Summiergliedern 7 berechnet und mit Hilfe von negativen Addierern 8 von dem an der Stelle x₂ hereinkommenden, zunächst mit dem gesamten Leitungsecho belasteten Nutzsignal abgezogen, so daß an der Stelle y₁ ein im wesentlichen von Echos befreites Signal an den TK-Kanal abgegeben wird.

Je nach Anforderungen an die Qualität der Echounterdrückung muß eine mehr oder weniger große Zahl n von FIR-Teilfiltern 10 innerhalb des ASIC 9 vorgesehen werden, die jeweils ein Teilecho mit Hilfe von entsprechend vielen Koeffizienten nachbilden und vom Nutzsignal abziehen. Wenn die zeitliche Breite eines Teilechos, wie im unteren Teil von Fig. 1 dargestellt, mit Δt ≤ 7 ms angenommen wird, ist bei einer Verarbeitungsgeschwindigkeit von 125 ms (entsprechend 8 kHz) pro Teilecho jeweils eine Anzahl von N = 56 Koeffizienten zur genauen Nachbildung des Teilechos erforderlich. Durch Kaskadieren einer entsprechenden Anzahl von gleichartigen FIR-Teilfiltern 10 auf dem ASIC 9 können dann entsprechend viele Teilechos berücksichtigt werden. Derzeit liegen die Forderungen von Netzbetreibern bei einer Unterdrückungsleistung von drei bis fünf Teilechos pro Gesamtecho.

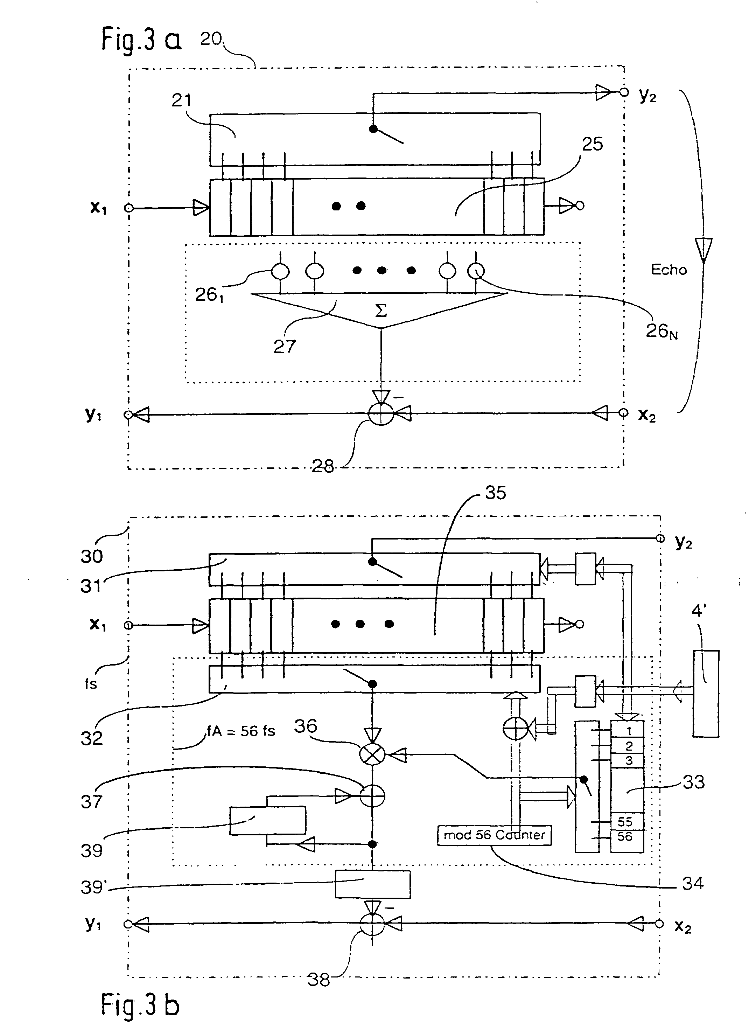

Die verschiedenen FIR-Teilfilter 10 können jeweils als Makrozelle auf dem ASIC vorgesehen sein. Eine solche Makrozelle 20 ist in Fig. 3a schematisch dargestellt. Die Makrozelle 20 enthält ein mit einer Demultiplexer-Einrichtung 21 in seiner wirksamen Länge einstellbares Schieberegister 25, in das über x₁ die Abtastwerte der aktuellen Sprachsignale eingegeben werden. Eine Summiereinrichtung 27 summiert die mit den entsprechenden Koeffizienten gewichteten Abtastwerte aus den N Multipliziereinrichtungen 26₁ bis 26_{N} und ein negativer Addierer 28 subtrahiert die so gewonnenen nachgebildeten Teilechos vom echobelasteten Nutzsignal auf der Leitung x₂-y₁.

In Fig. 3b ist eine geschickte Weiterentwicklung der Makrozelle 20 nach Fig. 3a dargestellt: Die Makrozelle 30 umfaßt einen vom digitalen Signalprozessor 4' ansteuerbaren Koeffizientenspeicher 33 für N Koeffizienten, der von einem modulo-N-Zähler (im gezeigten Beispiel ein modulo-56-Zähler) 34 adressiert ausgelesen werden kann. Dadurch ist nur ein einziges Multiplizierglied 36 erforderlich, welchem mit einer Arbeitsfrequenz f_{A} = N · f_{S} die entsprechenden Koeffizienten aus dem Koeffizientenspeicher 33 und die entsprechenden Abtastwerte aus dem Schieberegister 35 zur Multiplikation zugeführt werden, wobei die Abtastwerte über eine Abtastfrequenz f_{S} im Schieberegister 35 gespeichert werden. Das Schieberegister 35 wird wiederum mit einer ersten Demultiplexer-Einrichtung 31 in seiner wirksamen Länge eingestellt und mit einer zweiten Demultiplexer-Einrichtung 32 im Takt des modulo-N-Zählers 34 ausgelesen.

Die von dem Multiplizierglied 36 ausgegebenen Produktwerte aus Abtastwerten und entsprechenden Koeffizienten werden einem Addierer 37 zugeführt, der sie zu der jeweils in einem ersten Zwischenspeicher 39 über eine Rückkopplungsschleife abgespeicherten Summe der vorhergehenden Produktwerte addiert und schließlich das so nachgebildete Teilechosignal in einem zweiten Zwischenspeicher 39' ablegt. Dieses Teilechosignal wird dann mittels eines Subtrahiergliedes (bzw. eines negativen Addierers) 38 von dem an die TK-Einrichtung übertragenen echobelasteten Nutzsignal auf der Strecke x₂-y₁ abgezogen.

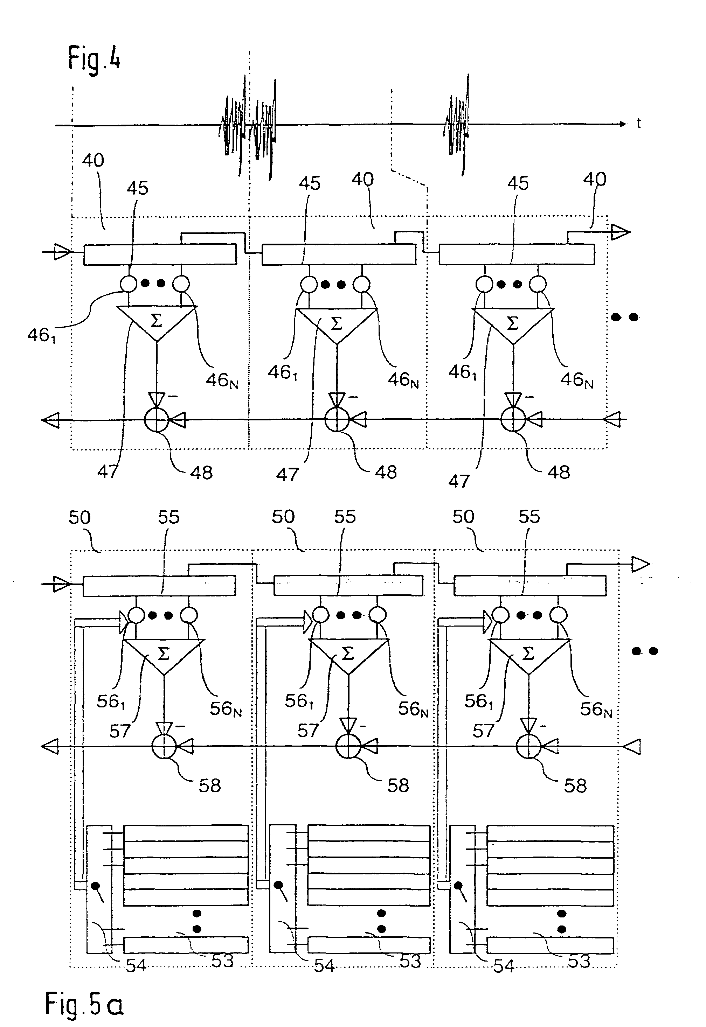

Wie in Fig. 4 schematisch dargestellt ist, können mehrere, im wesentlichen gleich aufgebaute Makrozellen 40 mit Schieberegistern 45, Multipliziergliedern 46₁ bis 46_{N}, Summiergliedern 47 und Subtrahiergliedern 48 im ASIC kaskadiert angeordnet sein. Durch den gleichen Aufbau der Makrozellen 40 lassen sich die Herstellungskosten des ASIC erheblich senken. Außerdem kann durch eine flexible Zusammenschaltung der Makrozellen 40 die Prozeßkapazität des ASIC besser ausgenutzt werden. Dadurch kann erfindungsgemäß eine variable Untermenge der von Makrozellen 40 gebildeten FIR-Teilfilter einem zu bedienenden TK-Kanal jeweils noch Bedarf abhängig von der Anzahl der Teilechos sowie der Größe der auftretenden Verzögerungszeiten zugeordnet werden. Ein Kanal mit wenigen Teilechos und/oder geringen Verzögerungszeiten "verbraucht" somit eine geringere Anzahl von FIR-Teilfiltern als ein Kanal mit vielen Teilechos.

In Fig. 5a ist eine weitere Ausführungsform der Echounterdrückungseinrichtung mit kaskadierten, im wesentlichen gleich aufgebauten Makrozellen 50 dargestellt, die wiederum jeweils ein Schieberegister 55, N Multiplizierglieder 56₁ bis 56_{N}, ein Summierglied 57 und ein Subtrahierglied 58 aufweisen. Diese Anordnung ist für die Zeitmultiplexbearbeitung von m TK-Kanälen vorgesehen. Dazu hat das Schieberegister 55 beispielsweise eine um den Faktor m größere Länge. Die Auswahl der passenden Abtastwerte muß jetzt die zeitliche Verschachtelung der Abtastwerte der m TK-Kanäle im Schieberegister 55 berücksichtigen. Zudem enthalten die Makrozellen 50 aber auch jeweils einen N Koeffizienten umfassenden Koeffizientenspeicher 53, der mit einem Demultiplexer 54 ausgelesen werden kann. Die Koeffizientenwerte werden den entsprechenden Mulitpliziergliedern 56₁ bis 56_{N} zugeführt und dort mit den jeweiligen Abtastwerten aus dem Schieberegister 55 multipliziert und im Addierer 57 zu einem entsprechenden, im Subtraktionsglied 58 vom Nutzsignal abzuziehenden nachgebildeten Echosignal zusammengesetzt.

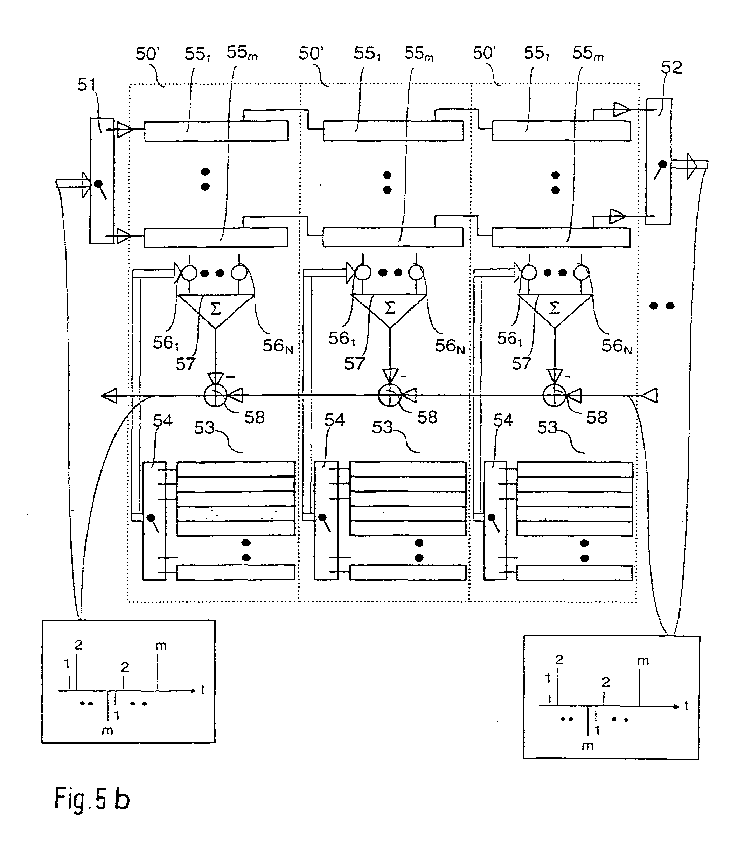

Fig. 5b zeigt eine Variante der Einrichtung mit kaskadierten Makrozellen 50', die sich von den Makrozellen 50 in Fig. 5a dadurch unterscheiden, daß sie statt eines einzigen Schieberegisters 55 einer der Anzahl m von zu bedienenden, parallelen, voneinander unabhängigen TK-Kanälen entsprechende Anzahl von Schieberegistern 55₁ bis 55ₘ aufweisen. Diese werden über eine Eingangs-Multiplexeinrichtung 51 mit entsprechenden Abtastwerten aus dem abgehenden Nah-End-Signal gespeist, welche mittels einer Ausgangs-Demultiplexereinrichtung 52 wieder zusammengefaßt werden können. Der zeitliche Verlauf der m Abtastwerte entsprechend den m TK-Kanälen ist schematisch in den beiden am linken und rechten unteren Rand von Fig. 5b gezeigten Kästchen dargestellt. Jedem der m zu bedienenden TK-Kanäle kann damit ein entsprechender Koeffizientenspeicher 53 zugeordnet und die Echounterdrückung auf sämtlichen m TK-Kanälen über ein einziges, im Multiplexerbetrieb umschaltbares Gesamtfilter bestehend aus mehreren FIR-Teilfiltern vorgenommen werden.

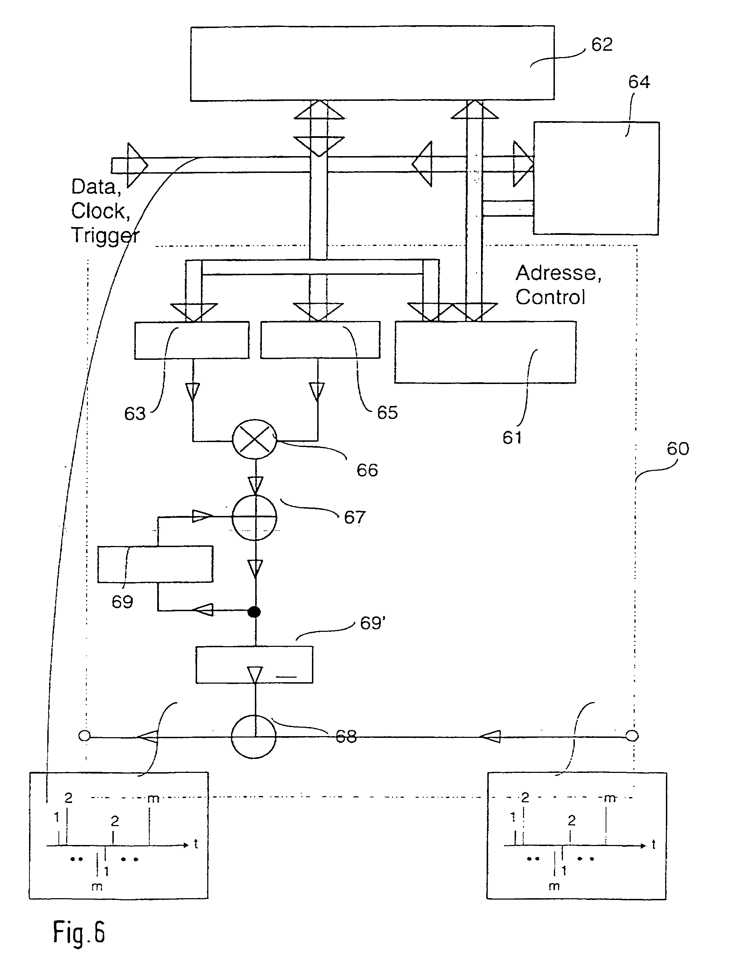

Fig. 6 schließlich zeigt eine weitere, besonders kompakte Ausführungsform, bei der auf dem ASIC 60 eine Steuereinheit 61 integriert ist, die den Ablauf des Echounterdrückungsprozesses mittels Adressenberechnung von Speicherdaten in einer auf ein RAM ausgelagerten Speichereinheit 62 und durch Ansteuerung von Ein- und Auslesevorgängen zwischen der Speichereinheit 62, dem digitalen Signalprozessor 64 und den auf dem ASIC 60 integrierten Filterelementen verwaltet. Die FIR-Teilfilter umfassen bei dieser Ausführungsform ein einziges Multiplizierglied 66, welchem gesteuert von der Steuereinheit 61 im Zeitmultiplexverfahren über einen ersten Pufferspeicher 63 die Koeffizienten und über einen weiteren Pufferspeicher 65 die entsprechenden Abtastwerte aus der Speichereinheit zur Produktbildung zugeführt werden. Die mit den Koeffizienten gewichteten Abtastwerte werden anschließend in einem Addierer 67 über eine Rückkopplungsschleife mit der in einem ersten Zwischenspeicher 69 zwischengespeicherten Summe der vorhergehenden Produktwerte addiert und schließlich das so nachgebildete Teilecho in einem zweiten Zwischenspeicher 69' abgelegt und anschließend mittels eines Subtrahiergliedes 68 von dem jeweils anliegenden empfangenen echobehafteten Nutzsignal abgezogen. Der zeitliche Verlauf der Signalabtastwerte aus den m unabhängigen TK-Kanälen ist wiederum schematisch in zwei Kästchen links und rechts am unteren Bildrand dargestellt.

Die in Fig. 6 gezeigte Ausführungsform benötigt besonders wenig Hardware. Der digitale Signalprozessor 64 wird weitestgehend entlastet und im wesentlichen nur noch zur Berechnung der Koeffizienten eingesetzt, während sämtliche Steuervorgänge durch die Steuereinheit 61 auf dem ASIC 60 ausgeführt werden. Das ASIC 60 wiederum ist von aufwendigen Speicherfunktionen entlastet, indem die Koeffizienten- und Abtastwertspeicherung auf den externen RAM-Speicher 62 verlagert ist, der als elektronisches Standardbauteil besonders preisgünstig und mit hoher Speicherkapazität erhältlich ist und zudem die Funktion der Schieberegister in den obengenannten Ausführungsformen ersetzt. Die Funktion der Multiplexer zum Auslesen der Koeffizientenspeicher, wie sie bei den Ausführungsbeispielen der Figuren 3b, 5a und 5b vorgesehen sind, werden durch eine einfache Addressenberechnung und entsprechende Ansteuerung von Ein- und Auslesevorgängen durch die Steuereinheit 61 ersetzt.

Bei in der Zeichnung nicht dargestellten Ausführungsformen der Einrichtung zur Echounterdrückung kann zusätzlich auch eine Einrichtung zur Erkennung von Nicht-Sprachsignalen auf einem der zu bedienenden TK-Kanäle, insbesondere zur Detektion von Modem- oder Faxsignalen vorgesehen sein, die eine automatische Abschaltung der Echounterdrückungsfunktion ermöglicht und damit die Stabilität der entsprechenden Modem-Verbindung erhöht.

Weiterhin kann zusätzlich eine Compander-Schaltung zur kombinierten Unterdrückung und Maskierung der auftretenden Leitungsechos vorgesehen sein, die vorzugsweise auf demselben ASIC realisiert sein wird, wie die FIR-Filter. Dadurch kann die Echounterdrückungsfunktion noch weiter verbessert werden.

Die oben erwähnten Testsignale zur Gewinnung der für die Echonachbildung geeigneten Koeffizienten auf dem entsprechenden TK-Kanal können Dirac-Impulse, analoge, vorzugsweise auf die Bandbreite des zu bedienenden TK-Kanals begrenzte Gaußsche Rauschsignale oder synthetische, vorzugsweise ternäre Pseudorauschsequenzen umfassen. Die Koeffizienten zur Echonachbildung werden vorzugsweise durch Korrelation der vorher ausgesendeten mit den empfangenen Echosignalen oder direkt mit Hilfe des NLMS (= Normalized Least Mean Square) - Algorithmus gewonnen.

Die oben beschriebenen Hardware-Komponenten zur Durchführung des erfindungsgemäßen Verfahrens lassen sich bei anderen Ausführungsformen auch ganz oder teilweise durch den Einsatz entsprechender Computerprogramme ersetzen, die jeweils die Funktion der Hardware-Komponenten übernehmen.

## Patentansprüche

1. Verfahren zur Unterdrückung von aus mehreren Teilechos bestehenden Gesamtechos in Telekommunikations(TK)-Einrichtungen, wie Endgeräten, Übertragungssystemen oder Vermittlungseinrichtungen, mit Hilfe von adaptiven FIR (= Finite Impulse Response)-Filtern, die das Gesamtecho nachbilden und von dem an die jeweilige TK-Einrichtung übertragenen, mit dem Echo belasteten Nutzsignal abziehen, wobei n FIR-Teilfilter (10) vorgesehen sind, die jeweils ein Teilecho nachbilden ,
**dadurch gekennzeichnet,**
**daß** eine Vielzahl m parallele, voneinander unabhängige TK-Kanäle mit einer Echounterdrückungsfunktion versorgt werden, und daß eine variable Untermenge der FIR-Teilfilter (10) einem zu bedienenden TK-Kanal jeweils nach Bedarf abhängig von der Anzahl der Teilechos und der Größe der auftretenden Verzögerungszeiten zwischen Signal und Echo zugeordnet wird.

2. Verfahren nach Anspruch 1, **dadurch gekennzeichnet, daß** die m unabhängigen TK-Kanäle im Zeitmultiplexverfahren mit der Echounterdrückungsfunktion bedient werden.

3. Verfahren nach Anspruch 1 oder 2, **dadurch gekennzeichnet, daß** die adaptiven FIR-Filter durch ein Computerprogramm realisiert sind, das die nachzubildenden Teilechos in Echtzeit berechnet.

4. Verfahren nach Anspruch 3, **dadurch gekennzeichnet, daß** das Computerprogramm gleichartige Unterprogramme enthält, die jeweils unabhängig voneinander zeitgleich ablaufen, und daß jedes dieser Unterprogramme als FIR-Teilfilter wirkt und ein Teilecho nachbilden kann.

5. Verfahren nach Anspruch 1 oder 2, **dadurch gekennzeichnet, daß** n gleichartige FIR-Teilfilter, die jeweils ein Teilecho nachbilden können, auf einem einzigen ASIC (= Application Specific Integrated Circuit) (9; 60) implementiert sind;
daß die nachzubildenden Teilechos in Echtzeit auf dem ASIC (9; 60) berechnet werden;
und daß ein digitaler Signalprozessor vorgesehen ist, der den ASIC (9; 60) steuert und die Filtereinstellungen, insbesondere nach erfolgter Berechnung der zur Echonachbildung erforderlichen Koeffizienten und Zeitverzögerungen im ASIC (9; 60) vornimmt.

6. Verfahren noch Anspruch 5, **dadurch gekennzeichnet, daß** für jedes FIR-Teilfilter (10) eine Makrozelle (20; 30; 40; 50; 50') im ASIC vorgesehen ist, und daß mehrere gleich aufgebaute Makrozellen (20; 30; 40; 50; 50') im ASIC kaskadiert betrieben werden.

7. Verfahren nach einem der vorhergehenden Ansprüche, **dadurch gekennzeichnet, daß** ein Dirac-lmpuls auf den entsprechenden TK-Kanal gesendet, die Echoantwort darauf gemessen und zur Nachbildung des Gesamtechos geeignete Koeffizienten berechnet und abgespeichert werden.

8. Verfahren nach einem der Ansprüche 1 bis 6, **dadurch gekennzeichnet, daß** eine definierte analoge Rauschsignalsequenz auf den entsprechenden TK-Kanal gesendet, die Echoantwort darauf gemessen und zur Nachbildung des Gesamtechos geeignete Koeffizienten berechnet und abgespeichert werden.

9. Verfahren nach Anspruch 8, **dadurch gekennzeichnet, daß** die analoge Rauschsignalsequenz ein vorzugsweise auf die Bandbreite des zu bedienenden TK-Kanals begrenztes Gaußsches Rauschsignal umfaßt.

10. Verfahren nach einem der Ansprüche 1 bis 6, **dadurch gekennzeichnet, daß** eine synthetische, vorzugsweise ternäre Pseudorauschsequenz auf den entsprechenden TK-Kanal gesendet, die Echoantwort darauf gemessen und zur Nachbildung des Gesamtechos geeignete Koeffizienten berechnet und abgespeichert werden.

11. Verfahren nach Anspruch 10, **dadurch gekennzeichnet, daß** die Koeffizienten zur Echonachbildung durch Korrelation der ausgesendeten Signale mit den empfangenen Echosignalen gewonnen werden.

12. Verfahren nach einem der vorhergehenden Ansprüche, **dadurch gekennzeichnet, daß** zur Koeffizientenberechnung aus den empfangenen Echosignalen in Kenntnis der ausgesendeten Signale ein NLMS (= Normalized Least Mean Square)-Algorithmus zur Berechnung der Filterkoeffizienten angewandt wird.

13. Verfahren nach einem der vorhergehenden Ansprüche, **dadurch gekennzeichnet, daß** zusätzlich die Übermittlung von Nicht-Sprachsignalen auf einem der TK-Kanäle detektiert und insbesondere bei Vorliegen einer Modem- oder Faxverbindung die Echounterdrückungsfunktion auf dem betreffenden TK-Kanal automatisch abgeschaltet wird.

14. Verfahren nach Anspruch 13, **dadurch gekennzeichnet, daß** zur Erkennung von Nicht-Sprachsignalen eine diskrete Fouriertransformation, insbesondere ein Goertzel-Algorithmus verwendet wird.

15. Verfahren nach einem der vorhergehenden Ansprüche, **dadurch gekennzeichnet, daß** zusätzlich auch eine Compander-Funktion zur Maskierung von auftretenden Leitungsechos durch Absenken des Empfangspegels auf dem entsprechenden TK-Kanal in den Sprachpausen ausgeübt wird.

## Claims

1. A method for suppression of overall echoes consisting of several partial echoes in telecommunication facilities such as terminals, transmission systems or switching centres, with the help of adaptive FIR (== Finite Impulse Response) filters, which reproduce the overall echo and subtract it from the echoey useful signal transmitted to the respective telecommunication facility, wherein n FIR partial filters each reproducing one partial echo are provided, **characterised in that**
a number m of parallel, mutually independent telecommunication channels are supplied with an echo suppression function, and that a variable subset of the FIR subfilters (10), as required in each case depending on the number of partial echoes and the length of the delay times occurring between signal and echo, is assigned to a telecommunication channel to be served.

2. A method according to Claim 1, **characterised in that** the m independent telecommunication channels are served by the echo suppression functions in the time division multiplex method.

3. A method according to Claim 1 or 2, **characterised in that** the adaptive FIR filters are implemented with a computer program, which calculates the echoes to be reproduced in real time.

4. A method according to Claim 3, **characterised in that** the computer program contains similar subprograms, each running synchronously independently of the others, and each of these subprograms acting as a FIR subfilter and being able to reproduce a partial echo.

5. A method according to Claim 1 or 2, **characterised in that** n similar FIR subfilters, each able to reproduce a partial echo, are implemented on a single ASIC (= Application Specific Integrated Circuit) (9; 60);
that the echoes to be reproduced are calculated in real time on the ASIC (9; 60);
and that a digital signal processor is provided which controls the ASIC (9; 60) and makes the filter settings, in particular after the calculation of the necessary coefficients and time delays for echo reproducing in the ASIC (9; 60).

6. A method according to Claim 5, **characterised in that** for each FIR subfilter (10) a macrocell (20; 30; 40; 50; 50') is provided in the ASIC, and that several similarly constructed macrocells (20; 30; 40; 50; 50') are operated cascaded in the ASIC.

7. A method according to one of the preceding claims, **characterised in that** a Dirac pulse is sent to the relevant telecommunication channel, the echo response is measured and suitable coefficients for reproducing the overall echo are calculated and stored.

8. A method according to one of Claims 1 to 6, **characterised in that** a defined analog noise signal sequence is sent to the relevant telecommunication channel, the echo response is measured and suitable coefficients for reproducing the overall echo are calculated and stored.

9. A method according to Claim 8, **characterised in that** the analog noise signal sequence includes a Gaussian noise signal preferably restricted to the bandwidth of the telecommunication channel to be served.

10. A method according to one of Claims 1 to 6, **characterised in that** a synthetic, preferably ternary pseudo-noise sequence is sent to the relevant telecommunication channel, the echo response is measured and suitable coefficients for reproducing the overall echo are calculated and stored.

11. A method according to Claim 10, **characterised in that** the coefficients for echo reproducing are obtained by correlation of the emitted signals with the received echo signals.

12. A method according to one of the preceding claims, **characterised in that** for the coefficient calculation from the received echo signals when knowing the emitted signals, an NLMS (= Normalized Least Mean Square) algorithm is applied for calculating the filter coefficients.

13. A method according to one of the preceding claims, **characterised in that** the transmission of non-voice signals on one of the telecommunication channels is also detected, and in particular if a modem or fax connection is present, the echo suppression function is automatically deactivated on the relevant telecommunication channel.

14. A method according to Claim 13, **characterised in that** a discrete Fourier transform, in particular a Goertzel algorithm, is used for detecting non-voice signals.

15. A method according to one of the preceding claims, **characterised in that** in addition a compander function for masking occurring line echoes by lowering the receive level on the corresponding telecommunication channel in the speech pauses is also performed.

## Revendications

1. Procédé d'annulation d'écho d'échos totaux composés de plusieurs échos partiels dans des dispositifs de télécommunication (TK) tels que les terminaux, les systèmes de transmission ou les dispositifs de commutation, à l'aide de filtres adaptatifs FIR (= Finite Impulse Response - filtres à réponse impulsionnelle finie) qui équilibrent l'écho total et tirent de celui-ci le signal utile, chargé d'écho, transmis au dispositif TK respectif, n filtres partiels FIR (10) étant prévus qui équilibrent chacun un écho partiel, **caractérisé en ce qu'**une multitude m de canaux TK parallèles, indépendants l'un de l'autre, sont alimentés par une fonction d'annulation d'écho, et **en ce qu'**un sous-ensemble variable de filtres partiels FIR (10) est associé à un canal TK à desservir respectivement selon les besoins en fonction du nombre d'échos partiels et de la taille des temps de retard produits entre le signal et l'écho.

2. Procédé selon la revendication 1, **caractérisé en ce que** les m canaux TK indépendants sont desservis par la fonction d'annulation d'écho dans un procédé de multiplexage temporel.

3. Procédé selon la revendication 1 ou 2, **caractérisé en ce que** les filtres adaptatifs FIR sont réalisés par un programme informatique qui calcule en temps réel les échos partiels à équilibrer.

4. Procédé selon la revendication 3, **caractérisé en ce que** le programme informatique contient des sous-programmes de même type qui se déroulent simultanément indépendamment l'un de l'autre et **en ce que** chacun de ces sous-programmes agit comme filtre partiel FIR et peut équilibrer un écho partiel.

5. Procédé selon la revendication 1 ou 2, **caractérisé en ce que** n filtres partiels FIR de même type, qui peuvent chacun équilibrer un écho partiel, sont mis en oeuvre sur un seul ASIC (= Application Specific Integrated Circuit) (9 ; 60) ; **en ce que** les échos partiels à équilibrer sont calculés en temps réel sur l'ASIC (9 ; 60), et **en ce qu'**un processeur de signal numérique est prévu, qui commande l'ASIC (9 ; 60) et applique les paramétrages de filtrage, notamment après que le calcul des coefficients et des retards de temps nécessaires pour l'équilibrage de l'écho aient été effectués dans l'ASIC (9, 60).

6. Procédé selon la revendication 5, **caractérisé en ce qu'**une macrocellule (20, 30, 40, 50, 50') est prévue pour chaque filtre partiel FIR (10) dans l'ASIC, et **en ce que** plusieurs macrocellules (20, 30, 40, 50, 50') structurées de manière identique sont exploitées en cascade dans l'ASIC.

7. Procédé selon l'une quelconque des revendications précédentes, **caractérisé en ce qu'**une impulsion de Dirac est envoyée au canal TK correspondant, la réponse de l'écho y est mesurée et des coefficients adaptés à l'équilibrage de l'écho total sont calculés et mémorisés.

8. Procédé selon l'une quelconque des revendications 1 à 6, **caractérisé en ce qu'**une séquence analogique définie de signal de bruit est envoyée au canal TK correspondant, la réponse de l'écho y est mesurée et des coefficients adaptés à l'équilibrage de l'écho total sont calculés et mémorisés.

9. Procédé selon la revendication 8, **caractérisé en ce que** la séquence analogique de signal de bruit comprend un signal de bruit additif de Gauss limité de préférence à la largeur de bande du canal TK à desservir.

10. Procédé selon l'une quelconque des revendications 1 à 6, **caractérisé en ce qu'**une séquence de pseudobruit synthétique, de préférence ternaire, est envoyée au canal TK correspondant, la réponse de l'écho y est mesurée, et des coefficients adaptés à l'équilibrage de l'écho total sont calculés et mémorisés.

11. Procédé selon la revendication 10, **caractérisé en ce que** les coefficients d'équilibrage de l'écho sont obtenus par corrélation des signaux envoyés avec les signaux d'écho reçus.

12. Procédé selon l'une quelconque des revendications précédentes, **caractérisé en ce qu'**un algorithme NLMS (= Normalized Least Mean Square) est appliqué au calcul des coefficients de filtrage pour calculer les coefficients à partir des signaux d'écho reçus en connaissant les signaux envoyés.

13. Procédé selon l'une quelconque des revendications précédentes, **caractérisé en ce qu'**en outre la transmission de signaux non vocaux sur l'un des canaux TK est détectée et que la fonction d'annulation d'écho sur le canal TK concerné est automatiquement coupée, notamment lors de l'existence d'une liaison par modem ou par fax.

14. Procédé selon la revendication 13, **caractérisé en ce qu'**une transformation de Fourier discrète, notamment un algorithme de Goertzel, est utilisée pour la reconnaissance de signaux non vocaux.

15. Procédé selon l'une quelconque des revendications précédentes, **caractérisé en ce qu'**une fonction de compression pour masquer des échos de ligne produits est en outre exercée par la baisse du niveau de réception sur le canal TK correspondant dans les pauses vocales.
